# EUROPÄISCHE PATENTSCHRIFT

(11) **EP 0 594 533 B1**
(45) Veröffentlichungstag und Bekanntmachung des Hinweises auf die Patenterteilung: **27.12.1996**
(21) Anmeldenummer: 93810688.7
(22) Anmeldetag: 29.09.1993
(51) Int. Cl.: G01L 1/16, G01L 5/00, G01L 5/16

(54) **Verfahren und Vorrichtung zum Erfassen von Materialspannungen in Formteilen**
Method and device for detection of material tensions in preformed pieces
Méthode et dispositif de détection des tensions de matériaux dans les pièces préformées

(30) Priorität: 23.10.1992 CH 3291/92
(43) Veröffentlichungstag der Anmeldung: 27.04.1994
(73) Patentinhaber: K.K. HOLDING AG, CH-8408 Winterthur (CH)
(72) Erfinder: Bader, Christoferus, CH-8413 Neftenbach (CH); Engeler, Paul, CH-8500 Frauenfeld (CH)

(56) Entgegenhaltungen:
- EP-A- 0 012 867
- EP-A- 0 266 452
- DE-A- 4 129 701
- PATENT ABSTRACTS OF JAPAN vol. 6, no. 88 (P-118) 26. Mai 1982 & JP-A-57 023 831 (YAMATAKE HONEYWELL CO. LTD.) 8. Februar 1982
- PATENT ABSTRACTS OF JAPAN vol. 13, no. 215 (P-874) 19. Mai 1989 & JP-A-01 032 134 (KAWASAKI STEEL CORP.) 2. Februar 1989
- STRAIN, Bd.28, Nr.1, Februar 1992, NEWCASTLE, GB Seiten 13 - 17, XP000249863 Z. HUAIPU 'a new method for measurement of three dimensional residual stresses in a multi-pass butt welded joint.'
- SENSORS & ACTUATORS, Bd.A22, Nr.1/3, März 1990, LAUSANNE, CH Seiten 406 - 409, XP000358479 C. CAVALLONI ET AL. 'new piezoelectric tranducers for internal strain measurement.'

## Beschreibung

In der Verarbeitungstechnik von Kunststoffen, Metallen, Legierungen etc. entstehen im Erstarrungsvorgang interne Spannungen, die im gefertigten Formteil weitgehend erhalten bleiben und zu Qualitätseinbussen führen können. Diese Spannungen konzentrieren sich an bestimmten Orten eines gegossenen, gespritzten oder gepressten Formteils und entstehen hauptsächlich durch ungleichmässige Schrumpfungen im Erstarrungs-Vorgang.
Bis heute war es nicht möglich, solche Spannungen zerstörungsfrei festzustellen, weder beim Produktionsprozess noch nach Vorliegen des Fertigproduktes.

Innere Materialspannungen zu messen ist heute nur mit einer komplexen Anbohrungstechnik und nur begrenzt möglich. Die vermutete kritische Spannungsstelle wird dabei stufenweise ausgebohrt. Während dieses Vorganges wird die Umgebung mit aufgebrachten Dehnmessstreifen auf Spannungsveränderung untersucht. Es ist heute also nur unter Zerstörung des Formteils möglich, interne Spannungen, die vom Herstellprozess herrühren, zu beurteilen. Es ist dies eine langwierige und kostspielige Aufgabe.

Ein Verfahren, bei dem eine solche Anbohungstechnik verwendet wird, ist offenbart in STRAIN, Bd. 28, Nr. 1, Februar 1992, Newcastle GB, Seiten 13-17, XP000 249 863.

Die erfindungsgemässe Vorrichtung geht neue Wege mit einem Verfahren, das erstmals den Schwindungs- oder Expansions-Vorgang während der Erstarrung des Formteils in seiner Press- oder Giessform misst. Die Erkenntnis, dass der Erstarrungsvorgang - also der Uebergang vom flüssigen bzw. Viskosen zum festen Zustand - Kristallumwandlungen und damit Volumenänderungen mit sich bringen, ist bekannt. Im Fall des Metallpulver Spritzgiessverfahrens (MIM) kann der Schwindungsfaktor bis 20% betragen.

Dass der damit begleitende Schwindungs- oder Expansionsvorgang (z.B. Expansion beim Uebergang von Wasser zu Eis) erhebliche Spannungen im Formteil hervorrufen kann, ist ebenfalls wohlbekannt. Kenntnis und Kontrolle dieser Spannungsvorgänge eröffnen somit neue Möglichkeiten der Qualitätskontrolle.

Neu und erfindungsgemäss ist demnach, dass man diesen zeitlich genau begrenzten Vorgang im Herstellungsprozess benützt, um in der Spritz- oder Giessform an vorbestimmten Punkten Veränderungen der Spannungen an der Forminnenwand zu messen. Als Messvorrichtung wird in die Spritz- oder Giessform eine Messfläche bündig mit der Werkstückoberfläche so eingebaut, dass diese z.B. in allen drei orthogonalen Richtungen frei beweglich ist, d.h. von der Wand der Spritz- oder Giessform durch einen minimalen Luftspalt getrennt ist. Dieser Luftspalt ist so klein, dass der Werkstoff im flüssigen oder viskosen Zustand nicht durchtreten kann, auch wenn er unter hohem Druck steht. Die Spaltweite ist von der Viskosität des Fliessmaterials abhängig und kann durch empirische Versuche bestimmt werden. Die Messfläche der Vorrichtung ist vorzugsweise die Frontfläche eines in die Form eingeschraubten Sensors, der Schub- und Druckkräfte messen und mit der entsprechenden Elektronik in elektrische Spannungsänderungen umwandeln kann. Es sind aber auch andere Messflächen denkbar und erfindungsgemäss.

In den folgenden Figuren soll die Erfindung als Anwendungsbeispiel in der Kunststoff-Spritzgiesstechnik dargestellt werden. Die Erfindung ist aber auch in der Metall-Druck-und Spritzgiesstechnik sowie in einer Reihe anderer Verfahren anwendbar, wo Schwindungsvorgänge erfasst werden sollen. Verfahren und Vorrichtung sollen anhand der vorliegenden Figuren näher erläutert werden. Es zeigen:
- Fig. 1: Schnitt durch ein Kunststoff-Spritzgiesswerkzeug mit Formteil und Messvorrichtung
- Fig. 2: eine als Einschraubsensor gestaltete Vorrichtung zum Erfassen von einer Druck- und zwei Schubspannungen, δx und δy
- Fig. 3: ein Messdiagramm mit einem Druckspannungsverlauf pz und zwei Schubspannungsverläufen δx, δy
- Fig. 4: ein Messdiagramm mit einem Druckspannungsverlauf pz und einem Schubspannungsverlauf δx für verschiedene Materialien M,N
- Fig. 5: ein Qualitäts-Ueberwachungsdiagramm mit drei Beurteilungsfenstern für die automatische Prozessüberwachung I, II, III
- Fig. 6: ein Sensor nach Fig. 2 im Schnitt
- Fig. 7: ein Senscr ähnlich Fig. 6, wo die Messelemente direkt im Senscrkopf 5 untergebracht sind
- Fig. 8: den Grundrissschnitt zu Fig. 7 nach V-V
- Fig. 9: eine Messanordnung für einen Einkomponenten-Sensor δx
- Fig. 10: eine Messanordnung für einen Zweikomponenten-Sensor pz, δx
- Fig. 11: eine Messanordnungs-Variante zu Fig. 10
- Fig. 12: eine Messanordnung der elektrischer Schaltung für einen Zweikompcnenten-Senscr pz, δx.

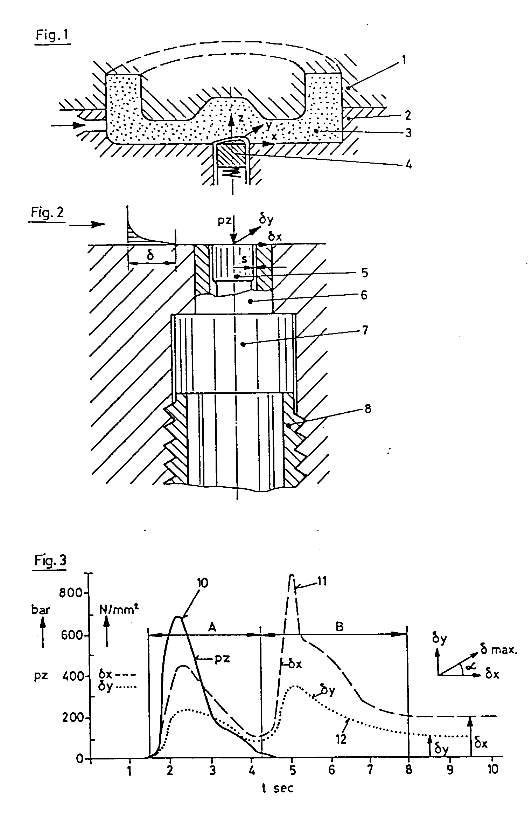

In Fig. 1 ist ein Schnitt durch ein Kunststoff-Spritzgiesswerkzeug gezeigt, 1 ist der Formoberteil, 2 der Formunterteil, 3 ist das gespritzte Formteil bzw. Werkstück. Die Messvorrichtung 4 ist ein von der Wand isoliertes Zylinderstück, das frontbündig mit der Werkstückoberfläche und messempfindlich in den drei Koordinatenachsen X, Y und Z montiert ist.

In Fig. 2 ist die Frontpartie der Messvorrichtung 4 deutlich gezeigt. Der Sensorkopf 5 ist mit Spiel S in der Sensorhülse 6 geführt und im Sensor 7 abgestützt. Mittels Verschraubung 8 wird der Sensor 7 z.B. im Formunterteil 2 montiert. Die Schubspannung δ erreicht entlang der Formwand Maximalwerte. Die Messfläche 9 ist als Beispiel einer Planfläche senkrecht zur Sensorachse dargestellt. Sie kann aber auch aus mehr als einer Fläche bestehen oder nichtplan gestaltet sein.

Fig. 3 zeigt die mit einer erfindungsgemässen Vorrichtung aufgenommenen Spannungsverläufe. Auffallend sind zwei grundsätzliche Phasen:
- Phase A:: Flüssigkeitsphase, Einspritzphase
- Phase B:: Erstarrungsphase, Schwindungsphase

Gehört die Messung des Druckspannungsverlaufs 10 zum bekannten Stand der Technik, so zeigt 11 den Schubspannungsverlauf δx, der in der Erstarrungs-bzw. Schwindungsphase B eine bisher unbekannte und erstaunliche Aussage ergibt, die erfindungsgemäss ganz neue Möglichkeiten eröffnet.

Aehnlich, aber in wesentlich reduzierterer Form ist die Erstarrungsschubspannung δy orthogonal zu δx. Aus diesen beiden Werten kann nach bekannter Vektcraddition die Grösse des max. Schubspannungsvektors δ max. sowie der Richtungswinkelt α festgestellt werden.

Aus der Formgebung des Werkstückes kann der Fachmann den oder die kritischen Messpunkte finden, wo der Sensor anzubringen ist. Gleichzeitig erkennt der Fachmann auch in welcher Richtung die gefährlichsten Erstarrungsspannungen wirken. In den meisten Fällen, insbesondere zur Produktionsüberwachung, wird er deshalb nur eine einzige Schubspannungsachse, z.B. δx, überprüfen, um den Einfluss verschiedener Prozessparameter beurteilen zu können.

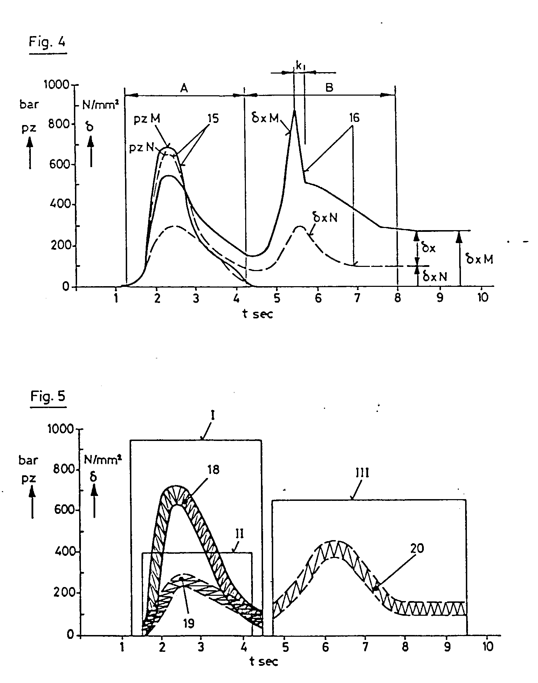

Fig. 4 zeigt ein Beispiel einer solchen Untersuchung mit z.B. zwei verschiedenen Materialien M und N. 15 sind die Druckspannungsverläufe verschiedener Materialien pz M und pz N, die fast ähnlich sind. Ganz erstaunlich sind aber die Unterschiede der Schubspannungsverläufe 16 in der Erstarrungsphase B, so dass die beiden Materialien erhebliche Restspannungs-Unterschiede Δδx aufweisen. Daraus zeigt sich, dass die Aussagekraft der Schubspannungen bezüglich Qualitätsanforderung eine neue Dimension eröffnen. Von interessanter Aussagekraft ist der "Sturz" K des Schubspannungsverlaufs δ x M.

In Fig. 5 sind die drei Beurteilungsfenster I, II und III einer prozessgeführten Spritzgiessmaschine erläutert. Dazu ist an der kritischen Stelle ein erfindungsgemässer Zweikomponenten-Sensor pz, δx montiert. In Fenster I werden die Einspritz-Druckgrenzverläufe 18 überwacht, in Fenster II die Schubspannungsgrenzen 19 während der Flüssigphase und in Fenster III die Grenzen der Schubspannungen 20 während der Erstarrungsphase. Auf dieser erfindungsgemässen neuen Basis lässt sich ein bisher unerreichtes Qualitätsniveau erreichen.

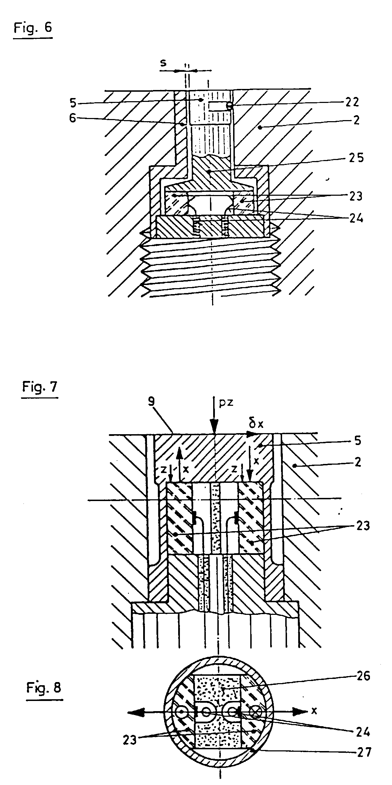

Fig. 6 zeigt einen Sensor entsprechend Fig. 2 im Schnitt. Der Sensor kann direkt in den Formteil 2 oder via Hülse 6, welche Teil des Sensors 7 ist, eingebaut werden. Der Spielraum S kann in gewissen Fällen mit dem Dichtring 22 versehen werden. Der Uebertragungsstempel 25 leitet die vom Sensorkopf 5 aufgenommenen Messkräfte auf das Kristallpaar 23, das gleichnamig gepolt ist, d.h. beide Kristallstücke 23 ergeben bei Belastung in Z-Richtung auf der Innenseite eine gleichnamige z.B. negative Ladung ab. Die Elektroden 24 nehmen nach bekanntem Stand der Technik die elektrischen Ladungen von den metallisierten Kristallflächen ab und leiten sie zum Anschlusskabel 36. (Fig. 12)

Fig. 7 zeigt eine Variante zu Fig. 6; so ist die Kristallanordnung 23 direkt im Sensorkopf 5 untergebracht.

Fig. 8 zeigt den Grundriss zu Fig. 7; so ist das Kristallpaar 23 durch den Füllkörper 26 getrennt und die Elektroden 24 sind im Füllkörper 26 eingebaut.

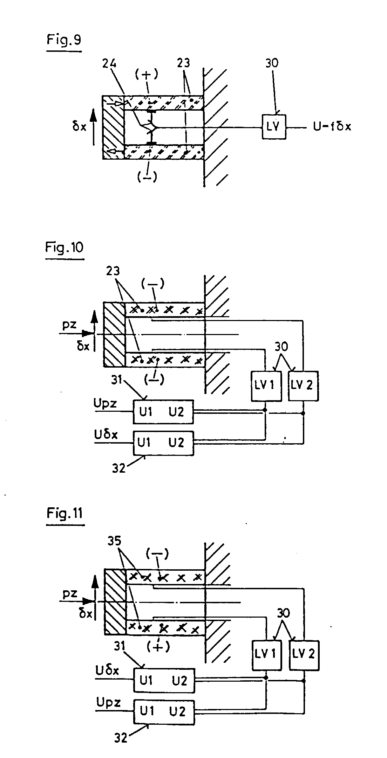

Fig. 9 zeigt die Mess- und Schaltanordnung, wenn der Sensor nur eine Komponente, die Schubspannung δx, messen soll, was die einfachste Schaltung ergibt. Die Elektroden 24 können zusammengeschaltet werden, deren Signale einem Ladungsverstärker 30 zugeführt werden, welcher direkt eine Ausgangsspannung U abgibt, Voraussetzung für diese Vereinfachung ist ein ungleichnamig gepoltes Kristallpaar 23 (+) (-).

Fig. 10 zeigt dieselbe Anordnung mit zwei gleichnamig gepolten Kristallpaaren 23 für zwei Komponenten pz und δx.

Fig. 11 zeigt die Anordnung mit zwei ungleichnamig gepolten Kristallpaaren 35 ebenfalls für zwei Komponenten pz und δx.

Der elektronische Aufwand an Ladungsverstärkern 30, Summiergeräten 31 und Differenzgeräten 32 ist in den beiden Fällen gleich.

Fig. 12 zeigt die elektronische Schaltung der erfindungsgemässen Anordnung deutlicher. Es ist der einfachere Zweikomponenten-Fall dargestellt mit dem gleichnamig gepolten Kristallpaar 23, eingebaut z.B. im Sensor nach Fig. 6,7. Das zweiadrige, aussen abgeschirmte Verbindungskabel 36 führt zum Verstärkerkasten 33, in welchem die beiden Ladungsverstärker 30, das Summiergerät 31 und das Differenzgerät 32 untergebracht sind.

Am Ausgang sind die beiden Signale
pz und δx
sowie der "Operate"-Anschluss zur Einschaltung der Geräte. Dank modernster Hybridtechnik weisen alle vier Teilgeräte kleine Dimensionen auf und sind dank Solidstate Technik betriebssicher und preisgünstig.

Das erfindungsgemässe Verfahren und die erfindungsgemässe Vorrichtung zur Erfassung von Materialspannungen wird hauptsächlich in der Spritzgiesstechnik mit Kunststoffen, Metallen und Keramiken neue Möglichkeiten eröffnen.

Es gibt aber eine Reihe anderer Fabrikationsprozesse, wo der Uebergang von einer viskosen in eine feste Phase Materialspannungen entstehen lässt, die bis heute ebenfalls nicht erfasst werden konnten und wo die Erfindung ganz neue Wege öffnet. Mit heutiger Technologie können piezoelektrische Kristallsensoren gebaut werden, die Spitzentemperaturen bis +500°C aushalten.

Die gezeigten Beispiele sind am einfachsten mit piezoelektrischen Kristallelementen zu verwirklichen, wie dargestellt wurde, insbesondere mit Quarzkristallelementen.

Aehnliche Einzelelemente sind aber auch auf piezoresistiver Basis mit diffundierten Siliciumelementen möglich. Es können aber auch Dünnfilm- oder DMS-bestückte Messglieder verwendet werden. Wegen der einfachen Signalabnahme eignen sich jedoch piezoelektrische Anordnungen am besten, weil sie auch am betriebssichersten sind.

### Bezeichnung der Figuren

- Fig. 1: 1 Formoberteil
2 Formunterteil
3 Formkstück
4 Messvorrichtung
- Fig. 2: 5 Sensorkopf
6 Sensorhülse
7 Sensor
8 Verschraubung
9 Messfläche
'S' Luftspalt
- Fig. 3: 10 Druckspannungsverlauf pz
11 Schubspannungsverlauf δx
12 Schubspannungsverlauf δy
A Flüssigphase
B Erstarrungsphase
δx Restspannung X
δy Restspannung Y
- Fig. 4: 15 Druckspannungsverläufe für 2 versch. Materialien oder Temperaturen
16 Schubspannungsverläufe für 2 versch. Materialien oder Temperaturen
K 'Sturz' des Schubspannungsverlaufes
- Fig. 5: I II III Beurteilungsfenster
18 Druckspannungsgrenzverläufe
19 Schubspannung viskose Phase
20 Schubspannung Schwindungsphase
- Fig. 6: 22 Dichtring
23 Kristallpaar gleichnamig gepolt
24 Elektroden für Signalabnahme
25 Uebertragunsstempel
- Fig. 7: Variante zu Fig. 6
- Fig. 8: 26 Isolator
27 Spannhülse
- Fig. 9: Variante zu Fig. 6
- Fig. 10: 30 Ladungsverstärker LV
31 Summiergerät
32 Differenzgerät
- Fig. 11: 35 Kristallpaar ungleichnamig gepolt
- Fig. 12: Q1, Q2 Ladungen
33 Verstärkergehäuse
36 Kabel

## Patentansprüche

1. Verfahren zum Erfassen von Materialspannungen in Formteilen während, und/oder nach ihrer Formung aus einem Werkstoff, der innerhalb einer entsprechenden Form aus einer fliessfähigen Phase in eine feste Phase übergeführt wird, dadurch gekennzeichnet, dass die Materialspannungen mindestens während eines Zeitpunktes des Füll- und Formvorganges und/oder des Erstarrungsvorganges mit Hilfe mindestens einer einem Sensor zugeordneten Messfläche erfasst werden, die einen Teil der den Formhohlraum begrenzenden Forminnenfläche bildet.

2. Verfahren nach Anspruch 1, dadurch gekennzeichnet, dass zusätzlich nach abgeschlossener Erstarrung die Restspannungen feststellbar sind.

3. Verfahren nach Anspruch 1, dadurch gekennzeichnet, dass auf die Messflächen wirkende Kräfte und Spannungen in bis zu drei Komponenten entsprechend vorzugsweise orthogonalen Koordinaten erfasst werden.

4. Verfahren nach Anspruch 1, dadurch gekennzeichnet, dass mindestens eine auf die Messfläche wirkende Kraftkomponente, vorzugsweise eine Schubspannung δx, gemessen und zur Steuerung des Produktionsvorganges für das Formteil derart ausgewertet wird, dass sowohl die von der betreffenden Kraftkomponente hervorgerufene maximale Spannung als auch die betreffende Restspannung in vorgewählten Grenzen gehalten werden.

5. Verfahren nach Anspruch 4, dadurch gekennzeichnet, dass bei einer Spritzgiessmaschine zur Formung des Formteils sowohl die Spritzphase als auch die Erstarrungsphase durch Kraftmessung mit Hilfe der Messflächen überwacht und die Messwerte zur Steuerung des Produktionsvorganges benützt werden.

6. Verfahren nach Anspruch 5, dadurch gekennzeichnet, dass zur Steuerung der Spritzgiessmaschine mindestens eines der folgenden drei Beurteilungsfenster einprogrammiert werden:
- Druckspannungsgrenzverläufe (I in Fig. 5)
- Schubspannungsverläufe der viskosen Phase (II in Fig. 5)
- Schubspannungsverläufe (III in Fig. 5) in der Erstarrungsphase

7. Vorrichtung zur Durchführung des Verfahrens nach Anspruch 1, gekennzeichnet durch eine einen Teil eines Sensors bildende Messfläche, die als Teil der Forminnenfläche einer Form zur Formung von Formteilen aus einem Werkstoff, der in dieser Form aus einer fliesfähigen Phase in eine feste Phase überführbar ist, bündig mit dieser Forminnenfläche so angeordnet ist, dass sie mindestens eine vom Werkstoff ausgeübte Spannung, vorzugsweise Schub- und Druckspannungen in drei orthogonalen Koordinaten, erfassen kann.

8. Vorrichtung nach Anspruch 7, dadurch gekennzeichnet, dass der Sensor Teil eines Ueberwachungs- und Steuerungssystems einer Spritzgiessmaschine darstellt, derart, dass die Grösse der erfassten Spannungen auf den Ueberwachungs- und Steuerungsvorgang der Maschine einwirken.

9. Vorrichtung nach Anspruch 7, dadurch gekennzeichnet, dass der Sensor (7) einen die Messfläche bildenden Sensorkopf (5) aufweist, der bündig mit der Forminnenwand positioniert ist und von derselben und von einer den Sensorkopf (5) umfassenden Sensorhülse (6) durch einen Ringspalt (5) getrennt ist, jedoch mit dem Sensor (7) so verbunden ist, dass er sowohl Axialspannungen (pz) wie auch Schubspannungen auf ein im Sensor eingebautes Messglied übertragen kann.

10. Vorrichtung nach Anspruch 7, dadurch gekennzeichnet, dass der Sensorkopf (5) über einen Uebertragungsstempel (25) mit dem Sensor-Messglied (23) verbunden ist.

11. Vorrichtung nach Anspruch 7, dadurch gekennzeichnet, dass der Sensorkopf (5) in einer Sensorhülse (6) mit Luftspalt S angeordnet ist.

12. Vorrichtung nach Ansprüchen 9 oder 11, gekennzeichnet durch einen Dichtring (22) zwischen Sensorkopf (5) und Sensorhülse (6).

13. Vorrichtung nach Anspruch 7, dadurch gekennzeichnet, dass der Sensorkopf (5) mit einer senkrecht zur Achse stehenden ebenen Messfläche (9) ausgerüstet ist.

14. Vorrichtung nach Anspruch 7, dadurch gekennzeichnet, dass der Sensorkopf (5) mit einer unebenen oder zusammengesetzten Messfläche (9) ausgerüstet ist.

15. Vorrichtung nach Anspruch 7, dadurch gekennzeichnet, dass das Messglied als piezoelektrische Kristallanordnung (23) ausgebildet ist.

16. Vorrichtung nach Anspruch 15, dadurch gekennzeichnet, dass die Kristallanordnung ein Kristallpaar (23) aufweist.

17. Vorrichtung nach Ansprüchen 7 und 16, dadurch gekennzeichnet, dass das Kristallpaar (23) direkt in den Sensorkopf (5) eingebaut und mit Hilfe eines Füllkörpers (26) so positioniert ist, dass es Ladungen (Q) der verschieden gerichteten Kräfte (z,x) selbsttätig vektoriell summiert.

18. Vorrichtung nach Ansprüchen 7 und 15, dadurch gekennzeichnet, dass das Messglied zwei gleichnamig gepolte Kristallpaare (23) aufweist.

19. Vorrichtung nach Ansprüchen 7 und 15, dadurch gekennzeichnet, dass das Messglied zwei ungleichnamig gepolte Kristallpaare (35) aufweist.

20. Vorrichtung nach Ansprüchen 7 und 15, dadurch gekennzeichnet, dass bei Messung von nur einer Schubspannungskomponente (δx) die Signale des ungleichnamig (+)(-) gepolten Kristallpaares (23) zusammengeschaltet und mit einer Elektrode (24) auf einen Ladungsverstärker (30) geleitet werden.

21. Vorrichtung nach Ansprüchen 7 und 15, dadurch gekennzeichnet, dass für die Messung der Druckspannungskomponente (pz) und der Schubspannungskomponente (δx) das gleichnamig gepolte Kristallpaar (-)(-) (23) mit zwei Ladungsverstärkern (30) gekuppelt wird, die ihrerseits mit einem Summiergerät (31) und einem Differenzgerät (32) verbunden sind.

22. Vorrichtung nach Ansprüchen 7 und 15, dadurch gekennzeichnet, dass für die Messung der Druckspannungskomponente (pz) und der Schubspannungskomponente (δx) das ungleichnamig gepolte Kristallpaar (-)(+) (35) mit zwei Ladungsverstärkern (30) gekuppelt sind, die ihrerseits mit einem Summiergerät (31) und einem Differenzgerät (32) verbunden sind.

23. Vorrichtung nach Ansprüchen 7 und 15, dadurch gekennzeichnet, dass die vektoriell addierten Ladungen über ein abgeschirmtes Doppelkabel (36) zum Verstärkergehäuse (33) geleitet werden, wo die Ladungen durch die Ladungsverstärker (30) in Spannungen U1 und U2 umgewandelt werden, welche hierauf durch ein Summiergerät (31) summiert und durch ein Differenzgerät (32) subtrahiert werden, und wo zur Einleitung des Messvorganges ein "Operate"-Kontakt vorgesehen ist.

24. Vorrichtung nach Anspruch 13, dadurch gekennzeichnet, dass das Messglied Quarzkristalle als piezoelektrische Kristalle aufweist.

25. Vorrichtung nach Anspruch 7, dadurch gekennzeichnet, dass das Messglied keramische Piezokristalle aufweist.

26. Vorrichtung nach Anspruch 7, dadurch gekennzeichnet, dass das Messglied piezoresistive Siliziumkristalle aufweist.

27. Vorrichtung nach Anspruch 7, dadurch gekennzeichnet, dass das Messglied Elemente, die mit Dehnmessstreifen oder Dünnfilmtechnik ausgerüstet sind, aufweisen.

## Claims

1. A process for detecting material stresses in castings and mouldings, during and/or after their forming from a material which is transformed from a fluid phase into a solid phase inside a corresponding mould, characterized by the material stresses being detected at least during one point in time of the filling and forming operation and/or of the solidification process by means of at least one measuring surface allocated to a sensor, this measuring surface forming part of the inner mould surface bounding the mould cavity.

2. A process according to claim 1, characterized additionally by the residual stresses being detectable after solidification is completed.

3. A process according to claim 1, characterized by the forces and stresses acting on the measuring surfaces being detected in up to three components corresponding to preferably orthogonal coordinates.

4. A process according to claim 1, characterized by at least one force component acting on the measuring surface, preferably a shear stress σx, being measured and used to control the production process and evaluated for the casting or moulding so that both the maximum stress induced by the force component in question and the associated residual stress are kept within preselected limits.

5. A process according to claim 4, characterized by the monitoring of both the injection phase and the solidification phase by force measurement with the help of measuring surfaces, and utilizing the measured values to control the production process when forming mouldings or casting on an injection moulding or die casting machine.

6. A process according to claim 5, characterized by at least one of the following three assessment windows being programmed for controlling the injection moulding or die casting machine:
- compressive stress curves (I in Fig. 5)
- shear stress curves of the viscous phase (II in Fig. 5)
- shear stress curves of the solidification phase (III in Fig. 5)

7. A device for performing the process according to claim 1, characterized by a measuring surface forming part of a sensor and being part of the inner surface of a mould for forming mouldings from a material which in this mould can be transformed from a fluid phase into a solid phase, and arranged flush with this inner mould surface so that it can detect at least one stress exerted by the material, preferably shear and compressive stresses, in three orthogonal coordinates.

8. A device according to claim 7, characterized by the sensor being part of a monitoring and control system for an injection moulding or die casting machine, so that the magnitude of the stresses detected can act on the monitoring and control process of the machine.

9. A device according to claim 7, characterized by the sensor (7) having a sensor head (5) forming the measuring surface, positioned flush with the inner mould wall and separated from this and from a sensor sleeve (6) surrounding the sensor head (5) by an annular clearance (5), but joined to the sensor (7) so that it can transmit both axial stresses (pz) and shear stresses onto a measuring element built into the sensor.

10. A device according to claim 7, characterized by the sensor head (5) being joined to the sensor measuring element (23) through a transmission pin (25).

11. A device according to claim 7, characterized by the sensor head (5) being located in a sensor sleeve (6) with clearance S.

12. A device according to claim 9 or 11, characterized by a seal ring (22) between the sensor head (5) and sensor sleeve (6).

13. A device according to claim 7, characterized by the sensor head (5) having a measuring surface (9) at right angles to its axis.

14. A device according to claim 7, characterized by the sensor head (5) having a non-plane or composite measuring surface (9).

15. A device according to claim 7, characterized by the measuring element consisting of a piezoelectric crystal array (23).

16. A device according to claim 15, characterized by the crystal array having a pair of crystals (23).

17. A device according to claims 7 and 16, characterized by the crystal pair (23) being fitted directly into the sensor head (5) and positioned with the help of a filler (26) so that it automatically sums vectorially charges (Q) of the variously oriented forces (z, x).

18. A device according to claims 7 and 15, characterized by the measuring element having two crystal pairs (23) of like polarity (Fig. 10).

19. A device according to claims 7 and 15, characterized by the measuring element having two crystal pairs (35) of unlike polarity.

20. A device according to claims 7 and 15, characterized by the signals from the crystal pair (23) of unlike (+)(-) polarity being interconnected and led with one electrode (24) onto one charge amplifier (30) when measuring only one shear stress component (σx).

21. A device according to claims 7 and 15, characterized by the crystal pair (23) of like (-)(-) polarity being coupled with two charge amplifiers (30), which in turn are connected to a summing unit (31) and a differentiator (32), for measuring the compressive stress component (pz) and the shear stress component (σx).

22. A device according to claims 7 and 15, characterized by the crystal pair (35) of unlike polarity (-)(+) being coupled with two charge amplifiers (30), which in turn are connected to a summing unit (31) and a differentiator (32), for measuring the compressive stress component (pz) and the shear stress component (σx).

23. A device according to claims 7 and 15, characterized by the vectorially added charges being led via a shielded double cable (36) to the amplifier housing (33), where they are converted by the charge amplifier (30) into voltages U1 and U2, which are then added by a summing unit (31) and subtracted by a differentiator (32), and where an "operate" contact is provided for initiating the measuring operation.

24. A device according to claim 13, characterized by the measuring element having quartz piezoelectric crystals.

25. A device according to claim 7, characterized by the measuring element having ceramic piezoelectric crystals.

26. A device according to claim 7, characterized by the measuring element having piezoresistive silicon crystals.

27. A device according to claim 7, characterized by the measuring element making use of strain gauges or thin-film technology.

## Revendications

1. Procédé pour la saisie de contrainte du matériau dans des pièces moulées et/ou après leur formage à partir d'un matériau qui, dans un moule adéquat, est transformé d'une phase fluide en une phase solide, caractérisé en ce que les contraintes du matériau sont saisies, au moins durant un temps donné, de la séquence de remplissage et de moulage et/ou de la phase de solidification au moyen d'au moins une surface de mesure attribuée à un capteur et qui fait partie intégrante de la surface interne de moule limitant la cavité du moule.

2. Procédé selon revendication 1 caractérisé en ce que les tensions résiduelles, une fois la solidification terminée, sont détectables.

3. Procédé selon revendication 1 caractérisé en ce que les forces et contraintes agissant sur les surfaces de mesure peuvent être saisies jusque selon trois composantes selon un système de coordonnées de préférence orthogonale.

4. Procédé selon revendication 1 caractérisé en ce qu'au moins une des composantes de forces agissant sur la surface de mesure, de préférence une contrainte de cisaillement δx, est mesurée et exploitée pour la commande du processus de fabrication de la pièce moulée de telle sorte qu'aussi bien la contrainte maximale engendrée par les composantes de force considérées que les tensions résiduelles correspondantes peuvent être maintenue dans des limites choisies à l'avance.

5. Procédé selon revendication 4 caractérisé en ce que sur une machine à injecter sous pression destinée au formage de pièces moulées, aussi bien la phase d'injection que la phase de solidification peuvent être surveillées au moyen des surfaces de mesure et que les valeurs de mesure peuvent être utilisées pour la commande du processus de production.

6. Procédé selon revendication 5 caractérisé en ce qu'au moins une des trois fenêtres d'expertise suivantes est programmées pour la commande de la machine à injecter:
- Evolutions limites des contraintes de compression (I de la Fig. 5)
- Evolutions limites des contraintes de cisaillement de la phase visqueuse (II de la Fig. 5)
- Evolutions limites des contraintes de cisaillement dans la phase de solidification (III de la Fig. 5)

7. Dispositif pour l'exécution du procédé selon revendication de brevet 1 caractérisé par une surface de mesure faisant partie d'un capteur qui constitue une partie de la surface interne du moule servant à mouler des pièces moulées en un matériau qui, dans ce moule, passe de la phase fluide à la phase solide et est arasée à la surface interne environnante du moule de sorte qu'elle puisse saisir au moins une des contraintes engendrées par le matériau, de préférence des contraintes de cisaillement et de compression selon trois coordonnées orthogonales.

8. Dispositif selon revendication 7 caractérisé en ce que le capteur constitue une partie d'un système de surveillance et de commande d'une machine à injecter sous pression de sorte que les grandeurs des contraintes à mesurer agissent sur le processus de surveillance et de commande de la machine.

9. Dispositif selon revendication 7 caractérisé en ce que le capteur (7) posséde une tête de capteur (5) constituant la surface de mesure qui est arasée à la paroi intérieure du moule et qui est isolée de cette dernière et d'une douille (6) entourant la tête du capteur (5) par une fente annulaire (6) mais qui est, toutefois, reliée au capteur 7 de telle sorte qu'elle puisse transmettre aussi bien des contraintes axiales (pz) que des contraintes de cisaillement à un maillon de mesure installé dans le capteur.

10. Dispositif selon revendication 7 caractérisé en ce que la tête du capteur (5) est relié par l'intermédiaire d'un cylindre de transmission (25) au maillon de mesure du capteur (23).

11. Dispositif selon revendication 7 caractérisé en ce que la tête du capteur (5) est aménagée dans une douille de capteur (6) avec un jeu radial S.

12. Dispositif selon revendication 7 caractérisé par un joint d'étanchéité 22 entre tête du capteur (5) et douille de capteur (6).

13. Dispositif selon revendication 7 caractérisé en ce que la tête du capteur (5) est munie d'une surface de mesure (9) normale à son axe.

14. Dispositif selon revendication 7 caractérise par en ce que la tête du capteur est munie d'une surface de mesure non plane ou composée de plusieurs éléments.

15. Dispositif selon revendication 7 caractérisé en ce que le maillon de mesure est constitué d'un aménagement de cristaux piézo-électriques (23).

16. Dispositif selon revendication 15 caractérisé en ce que l'aménagement de cristaux possède une paire de cristaux.

17. Dispositif selon revendications 7 et 16 caractérisé en ce que le paire de cristaux (23) est intégrée directement dans la tête du capteur (5) et positionnée au moyen d'une masse de remplissage (26) de telle manière qu'il additionne vectoriellement et de façon autonome les charges (Q) des forces d'orientations différentes (z, x).

18. Dispositif selon revendications 7 et 15 caractérisé en ce que le maillon de mesure possède deux paires de cristaux (23) de même polarité.

19. Dispositif selon revendications 7 et 15 caractérisé en ce que le maillon de mesure possède deux paires de cristaux (35) de polarité différentes.

20. Dispositif selon revendications 7 et 15 caractérisé en ce que lors de mesure de composantes de cisaillement uniquement (δx) les signaux de la paire de cristaux de polarité différentes (+) (-) sont reliés ensemble et amenés par l'électrode (24) à un amplificateur de charge (30).

21. Dispositif selon revendications 7 et 15 caractérisé en ce que pour la mesure de la composante de la contrainte de pression (pz) et de la composante de cisaillement (δx), la paire de cristaux de même polarité (-) (-) (23) est reliée à deux amplificateurs de charge (30) qui, de leur coté, sont connectés à un module d'addition (31) et à un module de soustraction (32).

22. Dispositif selon revendications 7 et 15 caractérisé en ce que pour la mesure de la composante de la contrainte de pression (pz) et de la composante de cisaillement (δx), la paire de cristaux de polarités différentes (-) (+) est reliée à deux amplificateurs de charge (30) qui, de leur coté, sont connectés à un module d'addition (31) et à un module de soustraction (32).

23. Dispositif selon revendications 7 et 15 caractérisé en ce que les charges additionnées vectoriellement sont amenées par un double câble blindé (36) au boîtier de l'amplificateur (33) où les charges sont transformées par les amplificateurs de charge (30) en tension U1 et U2 qui, ensuite, sont additonnées par un module d'addition (31) ou soustraites par un module de soustraction (32) et où se trouve un interrupteur "Operate" pour déclencher le processus de mesure.

24. Dispositif selon revendication 13 caractérisé en ce que le maillon de mesure possèdent des cristaux de quarz en tant que cristaux piézo-électriques.

25. Dispositif selon revendication 7 caractérisé en ce que le maillon de mesure possède des cristaux piézo-électriques en céramique.

26. Dispositif selon revendication 7 caractérisé en ce que le maillon de mesure possède des cristaux en silicium piézo-résistifs.

27. Dispositif selon revendication 7 caractérisé en ce que le maillon de mesure possède des éléments munies de jauges de contrainte ou utilisant des films minces.
